# EUROPÄISCHE PATENTSCHRIFT

(11) **EP 0 543 232 B1**
(45) Veröffentlichungstag und Bekanntmachung des Hinweises auf die Patenterteilung: **12.07.1995**
(21) Anmeldenummer: 92119023.7
(22) Anmeldetag: 06.11.1992
(51) Int. Cl.: F16L 41/04, F16L 41/06

(54) **Verfahren und Vorrichtung zum Erzeugen einer Öffnung in der Wand einer Rohrleitung**
Method and device for producing an opening on a pipe wall
Procédé et dispositif pour réaliser une ouverture dans la paroi d'un tuyau

(30) Priorität: 16.11.1991 DE 4137762
(43) Veröffentlichungstag der Anmeldung: 26.05.1993
(73) Patentinhaber: Ruhrgas Aktiengesellschaft, 45117 Essen (DE)
(72) Erfinder: Tiedtke, Manfred, W-4300 Essen 1 (DE)

(56) Entgegenhaltungen:
- EP-A- 0 427 453
- DE-A- 3 151 641
- GB-A- 1 150 693
- US-A- 3 461 750

## Beschreibung

Die Erfindung betrifft ein Verfahren und eine Vorrichtung zum Erzeugen einer Öffnung in einer Wand einer Rohrleitung, in der sich ein an der Innenfläche insbesondere preßanliegendes Innenrohr befindet, das insbesondere aus Kunststoff besteht.

Seit etwa 15 Jahren werden schadhafte erdverlegte Rohrleitungen aus Metall, insbesondere Gasleitungen in Ortsnetzen, nicht ausgewechselt, sondern saniert.

Bei dem sogenannten Relining-Verfahren wird in die defekte Rohrleitung aus Grauguß oder Stahl mit Ringraum oder überwiegend preßanliegend ein Rohr aus thermoplastischem Kunststoff eingezogen. Die alte Rohrleitung verbleibt im Boden, gleichsam als Leerrohr für die neue Rohrleitung.

Bei einer derart sanierten Rohrleitung mit preßanliegendem Innenrohr ist das nachträgliche Anbringen einer Abzweigleitung oder eines Hausanschlusses schwierig. Vor dem Verbinden der Abzweigleitung mit dem Innenrohr mittels Fitting muß in der Wand der metallischen Rohrleitung an der für die Abzweigleitung vorgesehenen Stelle eine Öffnung erzeugt werden.

Aus der EP 0 427 453 A1 ist ein Verfahren und eine Vorrichtung zum Schneiden einer Öffnung in eine Rohrleitung mittels eines Schneidwerkzeuges bekannt. Da die Rohrleitungswand vollständig durchtrennt wird, besteht die Gefahr, daß Beschädigungen am Innenrohr entstehen. Dies ist sehr problematisch, weil aus Sicherheitsgründen Riefen oder Kratzer auf dem Innenrohr nicht tiefer als 10 % der Rohrwandstärke sein dürfen. Anzustreben ist, daß Beschädigungen vollständig vermieden werden.

Demgemäß besteht die Aufgabe der Erfindung darin, bei der Vorbereitung von Anschlüssen o. dgl. Beschädigungen des Innenrohres praktisch vollständig zu vermeiden.

Diese Aufgabe wird erfindungsgemäß dadurch gelöst, daß in der Wand entlang des Randes der Öffnung eine einen Wandausschnitt begrenzende Kerbe erzeugt wird, deren Boden einen umlaufenden Wandmaterialsteg bildet, und daß der von der Kerbe begrenzte Wandausschnitt unter Abreißen des Wandmaterialsteges nach außen abgehoben wird.

Da die Rohrleitungswand nicht vollständig durchtrennt wird, sind Beschädigungen der Innenwand durch das Trennwerkzeug ausgeschlossen.

Der von der Kerbe begrenzte Wandausschnitt wird beispielsweise durch hydraulische Kratteinwirkung nach außen abgehoben, ohne daß eine Beschädigungsgefahr für das Innenrohr besteht. Das Verfahren ist besonders geeignet zum Erzeugen von Öffnungen in Rohren aus zähen Werkstoffen, beispielsweise aus Stahl.

Im Regelfall düfte die Wandstärke der Rohrleitung mit hinreichender Genauigkeit bekannt sein, um die Schnittiefe für das Trennwerkzeug zur Erzeugung der Kerbe einstellen zu können. Besonders vorteilhaft ist es im Bereich der geplanten Öffnung, die Wandstärke der Rohrleitung zu messen, beispielsweise mit einem Ultraschall-Meßgerät. Dadurch wird es möglich, Wanddickenunterschiede infolge von Fertigungstoleranzen oder Korrosionsabtrag bei der Erzeugung der Kerbe zu berücksichtigen.

Die Höhe des Wandmaterialsteges sollte möglichst gering sein, um die für das Abreißen erforderlichen Kräfte möglichst klein zu halten. Besonders vorteilhaft ist es, wenn die Stärke des Wandmaterialsteges unter ca. 1 mm, vorzugsweise unter 0,6 mm, eingestellt wird.

Vorteilhafterweise wird die Kerbe durch Fräsen hergestellt. Die Wärmeentwicklung ist bei diesem Trennverfahren sehr gering und kann durch Kühlung noch weiter vermindert werden. Dies ist wichtig bei Innenrohren aus Kunststoff, deren Kristallitschmelzpunkt nicht überschritten werden darf.

Vorzugsweise wird der Wandmaterialsteg durch Aufbringen von Zugkräften auf die im wesentlichen achsparallelen Kantenabschnitte des Wandausschnittes abgerissen. Dazu kann beispielsweise eine hydraulische Abziehvorrichtung verwendet werden.

Ferner betrifft die Erfindung eine Vorrichtung zum Einkerben einer Wand einer Rohrleitung mit einer mit der Rohrleitung verbindbaren Trenneinrichtung, die um die Rohrleitung drehbar und parallel zur Rohrachse verschiebbar ist, wobei die Trenneinrichtung ein Trennwerkzeug aufweist, das mit einer Führung zur Festlegung der Einkerbtiefe verbunden ist, die elastisch gegen die Rohrleitung verspannbar ist.

Das Trennwerkzeug wird an der Rohrleitungsaußenwand geführt, so daß gewährleistet ist, daß eine Beschädigung des Innenrohres durch das Trennwerkzeug bei Unrundheiten der Rohrleitung ausgeschlossen sind. Mit dieser Vorrichtung ist es möglich, einen Wandausschnitt mit beliebiger Form und Größe zu erzeugen. Auch kann die Rohrwand durch zwei umlaufende Schnitte in Umfangsrichtung und zwei achsparallele Schnitte rundum entfernt werden. Die Vorrichtung ist universell bei allen Rohrleitungen, unabhängig von deren Durchmesser und Material verwendbar und eignet sich besonders für den Baustelleneinsatz.

Vorteilhafte Ausgestaltungen der erfindungsgemäßen Vorrichtung sind in den Unteransprüchen angegeben.

Eine besonders vorteilhafte Vorrichtung zum Abheben eines Wandausschnittes, der durch eine nach dem erfindungsgemäßen Verfahren erzeugte Kerbe begrenzt ist, weist eine mittels Handpumpe betätigbare Hydraulikpresse auf, die sich einerseits mit einem Stempel an der Rohrleitung abstützt und die andererseits Abzieharme betätigt, an denen höher verstellbare Klauen lösbar befestigt sind.

Die speziell ausgebildeten Klauen können an die im wesentlichen achsparallelen Kanten des Wandausschnittes angesetzt werden. Die Klauen übertragen die von der Hydraulik erzeugten Kräfte auf den Wandausschnitt, so daß der Wandmaterialsteg abgerissen wird.

Im folgenden wird die Erfindung anhand eines in der Zeichnung schematisch dargestellten Ausführungsbeispiels näher erläutert. In der Zeichnung zeigen:
Fig. 1, eine schematische Vorderansicht eines Ausführungsbeispiels der erfindungsgemäßen Vorrichtung;
Fig. 2, eine Vorderansicht einer Trenneinrichtung 5 aus Fig. 1;
Fig. 3, das Detail "A" in Seitenansicht;
Fig. 4 eine Seitenansicht einer Prismenführung 31 aus Fig. 1;
Fig. 5, eine Vorderansicht einer erfindungsgemäßen Vorrichtung zum Abheben eines Wandausschnittes.

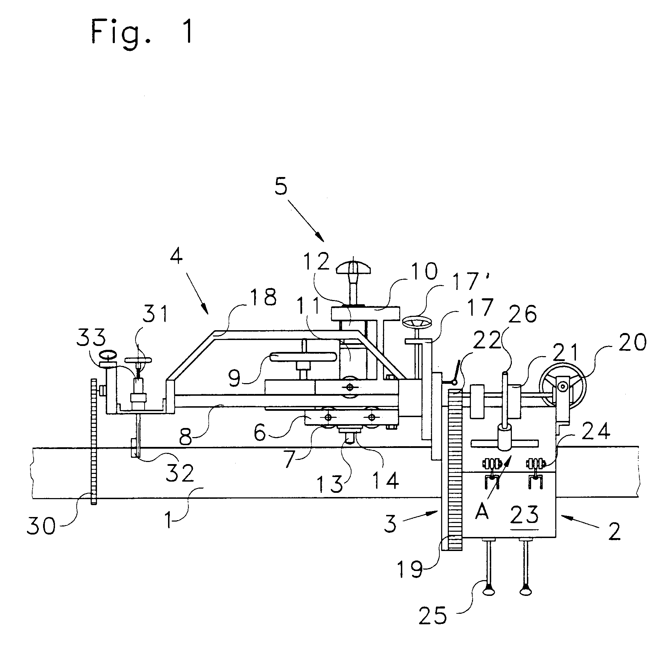

Aus Fig. 1 ist zu entnehmen, daß mit einer Rohrleitung 1 eine Befestigungseinrichtung 2 verbunden ist. Diese ist über einen Zahnradantrieb 3 mit einem Ausleger 4 verbunden, in dem eine Trenneinrichtung 5 parallel zur Rohrleitungsachse bewegbar ist.

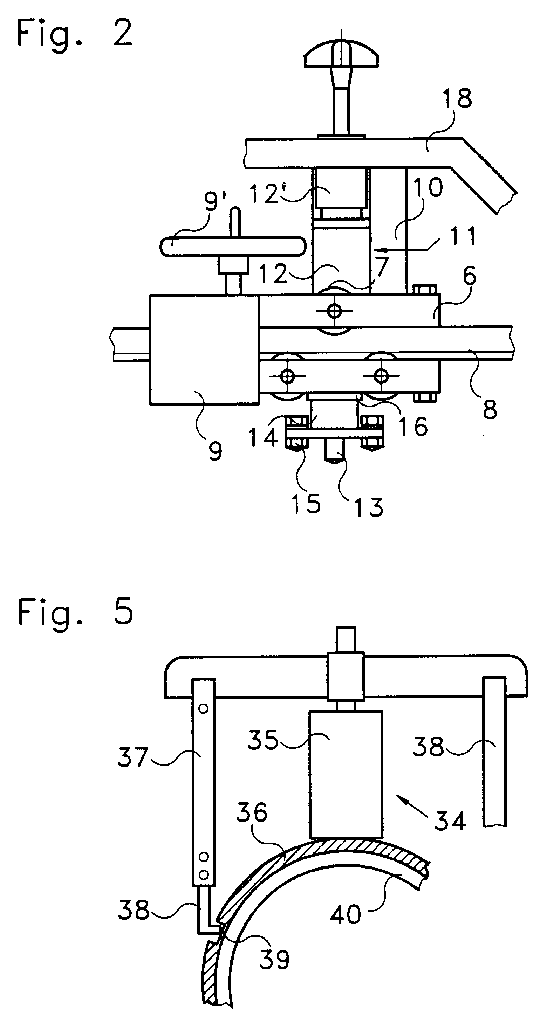

Die Trenneinrichtung 5, die in Fig. 2 im Detail dargestellt ist, weist einen Fahrwagen 6 mit Laufrollen 7 auf. Der Fahrwagen 6 kann mit Hilfe von zwei Zahnstangen 8 und einem nur schematisch dargestellten Untersetzungsgetriebe 9 mit einem Handrad 9' parallel zur Rohrleitungsachse verschoben werden.

Im Fahrwagen 6 ist mittels einer Führungsschiene 10 ein Trennwerkzeug 11 elastisch gelagert. Ein Druckluftmotor 12 ist senkrecht zur Rohrachse mit einer Feder 12' belastet und weist einen nicht dargestellten Adapter zur Aufnahme eines Schaftfräsers 13 auf.

Die Verwendung eines Druckluftmotors als Antrieb für den Fräser ist besonders vorteilhaft, weil Druckluftmotore sehr robust und unempfindlich gegen Überbelastung sind. Die erfindungsgemäße Vorrichtung wird im Regelfall nicht in einer Werkstatt, sondern auf Baustellen eingesetzt werden. Druckluft steht hier immer zur Verfügung.

Der Druckluftmotor 12 ist mit einer Führung 14 lösbar verbunden, durch die der Fräser 13 frei beweglich hindurchgeführt wird. Die Führung 14 ist mit zwei gehärteten gerundeten Abstützungen 15 versehen. Zwischen dem Druckluftmotor 12 und der Führung 14 ist ein Distanzring 16 zur Höhenverstellung der Führung angeordnet. Die Einfräßtiefe kann durch einen oder mehrere Distanzringe einfach und sicher in Abhängigkeit von der Jeweiligen Rohrwandstärke eingestellt werden.

Falls die Rohrwandstärke nicht genau bekannt ist, kann diese im Bereich der geplanten Öffnung mit Hilfe eines Ultraschall-Meßgerätes gemessen werden. Auf der Basis der Meßwerte kann dann die Einfräßtiefe bestimmt werden.

Mit einer Führungsschiene 17 ist der komplette Ausleger 4 mittels einer Handkurbel 17 höhenverstellbar, so daß der Fräser in die Rohrleitungswand eingefahren werden kann. Der Bügel 18 dient im wesentlichen zur Versteifung.

Der Ausleger 4 ist mit Hilfe des Zahnradantriebes 3 um die Rohrleitung 1 drehbar. Der Zahnradantrieb 3 weist einen Antriebszahnkranz 19 auf, an dem der Ausleger 4 mittels einer nicht dargestellten Schnellspanneinrichtung lösbar befestigt ist. Der Antriebszahnkranz 19 wird mit dem Rad 20 über ein festhemmendes Schneckengetriebe 21 mittels eines auskuppelbaren Zahnrades 22 angetrieben.

Zum Zwecke der Montage ist der Antriebszahnkranz 19 zweiteilig ausgebildet. Der Antriebszahnkranz ist über eine nicht dargestellte Rollenführung mit der Befestigungseinrichtung 2 verbunden. Eine Rolle ist als Spannrolle exzentrisch gelagert.

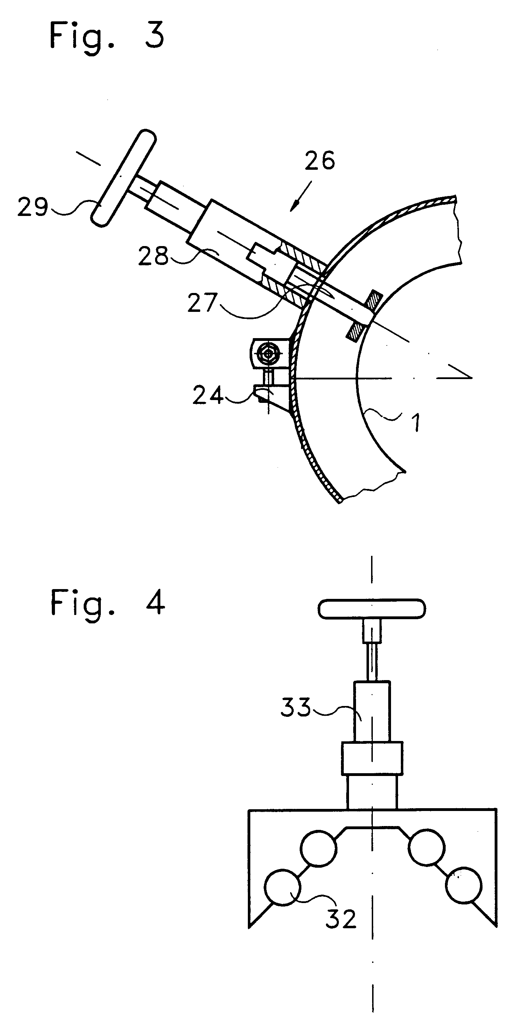

Die Befestigungseinrichtung weist ein zweiteiliges klappbares Gehäuse 23 auf, das mit Hilfe von zwei Klappverschlüssen 24 mit der Rohrleitung verspannt. Zwei Spannschrauben 25 sorgen für eine spielfreie Verbindung des Gehäuses mit der Rohrleitung. Die Einstellung auf den jeweiligen Rohrleitungsdurchmesser erfolgt mit zwei Kulissenschiebern 26, von denen nur einer in Fig. 3 im Detail dargestellt ist. Eine Kulissenstange 27 ist in einer Kulissenführung 28 mittels eines Knaufes 29 verschiebbar. Die Kulissenstange 27 ist mit einer nicht dargestellten Skala versehen, mit deren Hilfe jede Rohrnennweite voreinstellbar ist.

Der Ausleger ist auf der Befestigungseinrichtung 2 gegenüberliegenden Seite mittels einer Spannkette 30 und einer Prismenführung 31 gehalten, die in Fig. 4 im Detail dargestellt ist. Die Rollen 32 werden mittels einer handbetätigten Druckfeder 33 auf die Rohrleitung gepreßt. Auf diese Weise werden die beim Fräsen entstehenden Vibrationen ausgeglichen.

Die in Fig. 5 dargestellte Abziehvorrichtung weist eine Hydraulikpresse 34 auf, die sich mit einem Stempel 35 auf den Wandausschnitt 36 abstützt. Die mittels nicht dargestellter Handpumpe betätigte Hydraulikpresse 34 betätigt Abzieharme 37, an denen höherverstellbare Klauen 38 befestigt sind.

Die Klauen greifen an den im wesentlichen achsparallelen Kantenabschnitten des Wandausschnittes 36 an. Mit Aufbringen der Kräfte wird der Wandmaterialsteg 39 abgerissen und der Wandausschnitt 36 abgehoben. Das Innenrohr 40 kann dabei nicht beschädigt werden. Die erfindungsgemäße Abziehvorrichtung ist besonders geeignet für zähe Werkstoffe, beispielsweise Stahl.

Abwandlungen sind im Rahmen der Erfindung möglich. So kann sich der Stempel 35 auch an einer anderen Stelle außerhalb des Wandausschnittes 36 abstützen.

## Patentansprüche

1. Verfahren zum Erzeugen einer Öffnung in einer Wand einer Rohrleitung, in der sich ein an der Innenfläche insbesondere pressanliegendes Innenrohr befindet, das insbesondere aus Kunststoff besteht,
dadurch gekennzeichnet,
daß in der Wand entlang des Randes der Öffnung eine, einen Wandausschnitt begrenzende Kerbe erzeugt wird, deren Boden einen umlaufenden Wandmaterialsteg bildet und, daß der von der Kerbe begrenzte Wandausschnitt unter Abreißen des Wandmaterialsteges nach außen abgehoben wird.

2. Verfahren nach Anspruch 1,
dadurch gekennzeichnet,
daß im Bereich der geplanten Öffnung die Wandstärke der Rohrleitung gemessen wird.

3. Verfahren nach Anspruch 1 oder 2,
dadurch gekennzeichnet,
daß die Stärke des Wandmaterialsteges unter ca. 1 mm vorzugsweise auf unter 0,6 mm eingestellt wird.

4. Verfahren nach einem der Ansprüche 1 bis 3,
dadurch gekennzeichnet,
daß die Kerbe durch Fräsen hergestellt wird.

5. Verfahren nach einem der Ansprüche 1 bis 4,
dadurch gekennzeichnet,
daß der Wandmaterialsteg durch Aufbringen von Zugkräften auf im wesentlichen achsparallele Kantenabschnitte des Wandausschnittes abgerissen wird.

6. Vorrichtung zum Einkerben einer Wand einer Rohrleitung,
mit einer mit der Rohrleitung verbindbaren Trenneinrichtung (5), die um die Rohrleitung (1) drehbar und parallel zur Rohrachse verschiebbar ist, wobei die Trenneinrichtung (5) ein Trennwerkzeug (11) aufweist, das mit einer Führung (14) zur Festlegung der Einkerbtiefe verbunden ist, die elastisch gegen die Rohrleitung (1) verspannbar ist.

7. Vorrichtung nach Anspruch 6
dadurch gekennzeichnet,
daß das Trennwerkzeug (11) einen Pneumatikmotor (12) aufweist, der senkrecht zur Rohrachse federbelastet gelagert ist und der mittels Adapter einen Fräser (13) aufnimmt.

8. Vorrichtung nach Anspruch 7,
dadurch gekennzeichnet, daß der Pneumatikmotor (12) mit der Führung (14) lösbar verbunden ist.

9. Vorrichtung nach Anspruch 7 oder 8,
dadurch gekennzeichnet,
daß zwischen Pneumatikmotor (12) und Führung (14) mindestens ein Distanzring (16) angeordnet ist.

10. Vorrichtung nach einem der Ansprüche 6 bis 9,
dadurch gekennzeichnet,
daß die Führung (14) mindestens zwei gehärtete gerundete Abstützungen (15) aufweist.

11. Vorrichtung nach einem der Ansprüche 6 bis 10,
dadurch gekennzeichnet,
daß die Trenneinrichtung (5) in einem Ausleger (4) parallel zur Rohrleitung (1) geführt ist, der mittels eines mit der Rohrleitung verbindbaren Zahnradantriebes (3) um die Rohrleitung (1) drehbar ist.

12. Vorrichtung nach einem der Ansprüche 6 bis 11,
dadurch gekennzeichnet,
daß der Ausleger (4) einen aus mindestens einer Zahnstange (8) und einem Untersetzungsgetriebe gebildeten Axialantrieb für die Trenneinrichtung (5) aufweist.

13. Vorrichtung nach Anspruch 11 oder 12,
dadurch gekennzeichnet,
daß der Ausleger (4) an dem Zahnradantrieb (3) mittels einer Spannvorrichtung lösbar befestigt ist.

14. Vorrichtung nach Anspruch 11 oder 13,
dadurch gekennzeichnet,
daß der Zahnradantrieb (3) einen zur Rohrleitung koaxialen Antriebszahnkranz (19) aufweist, der per Handkurbel (17) über ein selbsthemmendes Schneckengetriebe (21) mittels eines auskuppelbaren Zahnrades (22) angetrieben wird.

15. Vorrichtung nach Anspruch 14,
dadurch gekennzeichnet,
daß der Antriebszahnkranz (19) zweiteilig ausgebildet ist.

16. Vorrichtung nach Anspruch 14 oder 15,
dadurch gekennzeichnet,
daß der Antriebszahnkranz (19) drehbar mit einer Befestigungseinrichtung (2) verbunden ist.

17. Vorrichtung nach Anspruch 16,
dadurch gekennzeichnet,
daß der Antriebszahnkranz (19) über mehrere Rollen mit der Befestigungseinrichtung (2) verbunden ist, wobei eine Rolle als Spannrolle exzentrisch gelagert ist.

18. Vorrichtung nach Anspruch 16 oder 17,
dadurch gekennzeichnet,
daß die Befestigungseinrichtung (2) ein zweiteiliges Gehäuse (23) aufweist.

19. Vorrichtung nach einem der Ansprüche 16 bis 18,
dadurch gekennzeichnet,
daß die Befestigungseinrichtung (2) eine Einstellvorrichtung (26) für die Anpassung an unterschiedliche Rohrleitungsdurchmesser aufweist.

20. Vorrichtung nach Anspruch 19,
dadurch gekennzeichnet,
daß die Einstellvorrichtung (26) aus mindestens zwei Kulissenschiebern gebildet wird, die jeweils mit einer Einstellskala versehen sind.

21. Vorrichtung nach einem der Ansprüche 11 bis 20,
dadurch gekennzeichnet,
daß der Ausleger (4) mittels einer Führungsschiene (17) höhenverstellbar ist.

22. Vorrichtung nach einem der Ansprüche 11 bis 21,
dadurch gekennzeichnet,
daß der Ausleger (4) mittels einer Spannkette (30) mit der Rohrleitung (1) verbunden ist.

23. Vorrichtung nach einem der Ansprüche 11 bis 22,
dadurch gekennzeichnet,
daß der Ausleger (4) mittels einer federbelasteten Prismenführung (31) geführt wird, welche mittels Rollen (32) an verschiedene Rohrleitungsdurchmesser anpaßbar ist.

24. Vorrichtung zum Abheben eines Wandausschnittes, der durch eine, nach einem der Ansprüche 1 bis 5 erzeugten Kerbe begrenzt ist, mit einer mittels Handpumpe betätigbaren Hydraulikpresse (34), die sich einerseits mit einem Stempel (35) an der Rohrleitung (1) abstützt und die andererseits Abzieharme (37) betätigt, an denen höhenverstellbare Klauen (38) lösbar befestigt sind.

## Claims

1. A method for producing an opening in a wall of a pipeline in which an inner tube made in particular of plastic is located, in particular is pressed tightly against the inside surface,
characterised in that
a notch limiting a wall cutout is produced in the wall along the edge of the opening, the bottom of said notch forming a peripheral ridge of wall material and that the wall cutout limited by said notch is pulled out tearing away said ridge of wall material.

2. Method according to claim 1,
characterised in that,
the wall thickness of the pipeline in the area of the planned opening is measured.

3. Method according to claim 1 or 2,
characterised in that,
the thickness of the ridge of wall material is set to be less than approx. 1 mm and preferably less than 0.6 mm.

4. Method according to any one of claims 1 through 3,
characterised in that,
the notch is made by milling.

5. Method according to any one of claims 1 through 4,
characterised in that,
the ridge of wall material is torn away by applying tensile forces to the mainly axis-parallel edge sections of the wall cutout.

6. Device for producing a notch in a wall of a pipeline,
comprising a cutting device (5) which can be connected to the pipeline and which is rotatable around the pipeline (1) and can be moved parallel to the pipeline axis, the cutting device (5) having a cutting tool (11) which is connected to a guide (14) which can be elastically tensioned against the pipeline (1) for establishing the notch depth.

7. Device according to claim 6,
characterised in that,
the cutting tool (11) has a pneumatic motor (12) which is spring-mounted vertical to the pipe axis and which accommodates a milling cutter (13) by means of an adapter.

8. Device according to claim 7,
characterised in that,
the pneumatic motor (12) is detachably connected to the guide (14).

9. Device according to claim 7 or 8,
characterised in that,
between the pneumatic motor (12) and the guide (14) at least one spacer ring (16) is arranged.

10. Device according to any one of claims 6 through 9,
characterised in that,
the guide (14) has at least two hardened rounded supports (15).

11. Device according to any one of claims 6 through 10.
characterised in that,
the cutting device (5) is guided parallel to the pipeline (1) in an arm (4) which can be rotated around the pipeline (1) by means of a gear drive which can be connected to said pipeline.

12. Device according to any one of claims 6 through 1,
characterised in that,
the arm (4) has an axial drive for the cutting device (5) which comprises at least one rack (8) and a reducing gear.

13. Device according to claim 11 or 12,
characterised in that,
the arm (4) is detachably mounted on the gear drive (3) by means of a clamping device.

14. Device according to claim 11 or 13,
characterised in that,
the gear drive (3) has a toothed ring (19) coaxial to the pipeline, said toothed ring being driven by a hand crank (17) via a self-locking worm gear (21) by means of an disengagable gear wheel (22).

15. Device according claim 14,
characterised in that,
the toothed ring (19) is made up of two parts.

16. A device according to claim 14 or 15,
characterised in that,
the toothed ring (19) is rotatably connected to a mounting device (2).

17. Device according to claim 16,
characterised in that,
the toothed ring (19) is connected to the mounting device (2) via several rollers, one roller being excentrically mounted as a tension roller.

18. Device according to claims 16 or 17,
characterised in that,
the mounting device (2) has a two-part housing (23).

19. Device according to any one of claims (16) through (18),
characterised in that,
the mounting device (2) has an adjusting device (26) to permit adjustment to the different pipeline diameters.

20. Device according to claim 19,
characterised in that,
the adjusting device (26) consists of at least of two rider shifters which are each provided with an adjusting scale.

21. Device according to any one of claims 11 through 20,
characterised in that,
the height of the arm (4) can be adjusted by means of a guide rail (17).

22. Device according to any one of claims 11 through 21,
characterised in that,
the arm (4) is connected to the pipeline (1) by means of a tensioning chain (30).

23. Device according to any one of claims 11 through 22,
characterised in that,
the arm (4) is guided in a spring-mounted Vee-guide (31) which can be adjusted to the different pipeline diameters by means of rollers (32).

24. Device for pulling out a wall cutout, which has been limited by a notch produced in accordance with any one of claims 1 through 5, by means of a hydraulic press (34) activated by a hand pump, said hydraulic press supporting itself on the one side of the pipeline (1) by a prop (35) and also activating pull-off arms (37) to which height-adjustable grips (38) are detachably mounted.

## Revendications

1. Procédé pour réaliser une ouverture dans la paroi d'un tuyau dans lequel se trouve un tube intérieur collé, de préférence sous pression, à la surface intérieure dudit tuyau et consistant, de préférence, en matière plastique, caractérisé par le fait qu'une entaille, délimitant une section de paroi, est réalisée dans la paroi le long du bord de l'ouverture, dont le fond forme une entretoise périphérique de matériau de la paroi, et que la section de paroi délimitée par ladite entaille est enlevée vers l'extérieur par arrachement de l'entretoise de matériau de paroi.

2. Procédé selon la revendication 1, caractérisé par le fait qu'à l'endroit de l'ouverture prévue l'épaisseur de la paroi du tuyau est mesurée.

3. Procédé selon l'une des revendications 1 ou 2, caractérisé par le fait que l'épaisseur de l'entretoise de matériau de paroi est ajustée à une valeur en dessous d'environ 1 mm, de préférence en dessous de 0,6 mm.

4. Procédé selon l'une des revendications 1 à 3, caractérisé par le fait que l'entaille est réalisée par fraisage.

5. Procédé selon l'une des revendications 1 à 4, caractérisé par le fait que l'entretoise de matériau de paroi est arrachée par application de forces de traction sur des sections de bord, essentiellement parallèles à l'axe, de la section de paroi.

6. Dispositif pour réaliser une entaille dans la paroi d'un tuyau avec un dispositif de séparation (5) qui peut être relié au tuyau (1), soumis à un mouvement de rotation autour du tuyau et déplacé par rapport à l'axe du tuyau, le dispositif de séparation (5) présentant un outil de séparation (11) relié à un guidage (14), haubané contre le tuyau (1) de façon élastique, pour déterminer la profondeur de l'entaille.

7. Dispositif selon la revendication 6, caractérisé par le fait que l'outil de séparation (11) présente un moteur pneumatique (12), logé perpendiculairement à l'axe du tuyau sous l'action d'un ressort, qui tient une fraise (13) à l'aide d'un raccord.

8. Dispositif selon la revendication 7, caractérisé par le fait que le moteur pneumatique (12) est lié au guidage (14) de façon détachable.

9. Dispositif selon l'une des revendications 7 ou 8, caractérisé par le fait qu'entre le moteur pneumatique (12) et le guidage (14) est disposé au moins un collier de centrage (16).

10. Dispositif selon l'une des revendications 6 à 9, caractérisé par le fait que le guidage (14) présente au moins deux supports trempés arrondis (15).

11. Dispositif selon l'une des revendications 6 à 10, caractérisé par le fait que le dispositif de séparation (5) est guidé parallèlement au tuyau (1) par un bras (4) pouvant être tourné autour du tuyau (1) à l'aide d'une commande par engrenages (3) qui peut être reliée au tuyau.

12. Dispositif selon l'une des revendications 6 à 11, caractérisé par le fait que le bras (4) présente un entraînement axial pour le dispositif de séparation (5), composé d'au moins d'une crémaillère et d'un démultiplicateur.

13. Dispositif selon l'une des revendications 11 ou 12, caractérisé par le fait que le bras (4) est fixé de façon démontable à la commande par engrenages (3) à l'aide d'un dispositif tendeur.

14. Dispositif selon l'une des revendications 11 ou 13, caractérisé par le fait que la commande par engrenages (3) présente une couronne dentée motrice (19) disposée coaxialement par rapport au tuyau et entraînée par une manivelle (17) à travers d'un engrenage à vis sans fin (21) à l'aide d'une roue dentée débrayable (22).

15. Dispositif selon la revendication 14, caractérisé par le fait que la couronne dentée motrice (19) consiste en deux pièces.

16. Dispositif selon l'une des revendications 14 ou 15, caractérisé par le fait que la couronne dentée motrice (19) est liée de manière mobile à un dispositif de fixation (2).

17. Dispositif selon la revendication 16, caractérisé par le fait que la couronne dentée motrice (19) est liée au dispositif de fixation (2) à travers plusieurs rouleaux dont un est logé de façon excentrique comme rouleau tendeur.

18. Dispositif selon l'une des revendications 16 ou 17, caractérisé par le fait que le dispositif de fixation (2) présente un carter en deux pièces (23).

19. Dispositif selon l'une des revendications 16 à 18, caractérisé par le fait que le dispositif de fixation (2) présente un dispositif de réglage (26) pour l'adaptation à différents diamètres de tuyau.

20. Dispositif selon la revendication 19, caractérisé par le fait que le dispositif de réglage (26) est formé d'au moins deux vannes à coulisse munies chacune d'un cadran de réglage.

21. Dispositif selon l'une des revendications 11 à 20, caractérisé par le fait que la hauteur du bras (4) peut être ajustée à l'aide d'une glissière de guidage (17).

22. Dispositif selon l'une des revendications 11 à 21, caractérisé par le fait que le bras (4) est lié au tuyau (1) à l'aide d'une chaîne de tension (30).

23. Dispositif selon l'une des revendications 11 à 22, caractérisé par le fait que le bras (4) est guidé à l'aide d'une glissière prismatique (31) chargée par ressort qui peut être adaptée, par des rouleaux (32), à de différents diamètres de tuyau.

24. Dispositif pour enlever une section de paroi, délimitée par une entaille réalisée selon l'une des revendications 1 à 5, à l'aide d'une presse hydraulique (34) pouvant être actionnée par une pompe à main qui, d'une part, s'appuie avec une estampe (35) sur le tuyau (1) et qui, d'autre part, actionne des bras d'arrachement (37) où sont fixées, de façon démontable, des griffes dont la hauteur peut être réglée.
